# EUROPÄISCHE PATENTSCHRIFT

(11) **EP 0 770 509 B1**
(45) Veröffentlichungstag und Bekanntmachung des Hinweises auf die Patenterteilung: **18.12.2002**
(21) Anmeldenummer: 96116729.3
(22) Anmeldetag: 18.10.1996
(51) Int. Cl.: B60H 1/00

(54) **Verfahren zum Abkühlen des Innenraumes eines Kraftfahrzeugs**
Metod of cooling the interior of a vehicle
Procédé permettant de refroidir l'intérieur d'un véhicule

(30) Priorität: 27.10.1995 DE 19540088
(43) Veröffentlichungstag der Anmeldung: 02.05.1997
(73) Patentinhaber: ADAM OPEL AG, 65423 Rüsselsheim (DE)
(72) Erfinder: Jordan, Frank, Dipl.-Phys., 65428 Rüsselsheim (DE)

(56) Entgegenhaltungen:
- EP-A- 0 677 408
- DE-A- 4 214 687
- FÖLLINGER, O. ET AL.: "Regelungstechnik; Einf. in d. Methoden u. ihre Anwendung" 1978 , ELITERA , BERLIN XP002076971 * Seite 13, Spalte 2 *

## Beschreibung

Die Erfindung bezieht sich auf ein Verfahren zur Abkühlung des Innenraumes eines Kraftfahrzeugs mit den im Oberbegriff des Patentanspruchs 1 angegebenen Merkmalen.

Wie aus der gattungsgemäßen DE-OS 42 14 687 bekannt, wird eine Innenraum-Soll-Temperatur vorgegeben und eine Ist-Temperatur gemessen. Eine Regeleinrichtung arbeitet mit dem Ziel der Angleichung der Ist-Temperatur an die Soll-Temperatur. Dazu wird Außenluft mittels einer Klimatisierungsvorrichtung in einem erforderlichen Maß abgekühlt (oder auch erwärmt) und anschließend über verschiedene Luftkanäle und -auslässe in den Innenraum ausgeblasen. Der Betrieb der Klimatisierungsvorrichtung wird in Abhängigkeit von einem Ausgangssignal der Regeleinrichtung sowie von einer Ausblastemperatur, die im Bereich eines Luftauslasses gemessen wird, geregelt. Zusätzlich wird die Verteilung der Ausblasluft auf an unterschiedlichen Stellen des Innenraumes endende Luftkanäle von dem Ausgangssignal der Regeleinrichtung beeinflußt. Im allgemeinen wird es bevorzugt, daß (wie in der DE-OS 42 14 687 beschrieben) bei einer erforderlichen Aufheizung des Innenraumes mehr warme Luft in einen Fußraum des Fahrzeugs gefördert wird als in einen Kopfraum. Bei einer erforderlichen Abkühlung des Innenraumes ist dies jedoch umgekehrt. Es ist dann vornehmlich kalte Luft im Kopfraum erwünscht.

Aus Kostengründen soll die Ausblastemperatur der Luft, die in den Innenraum gefördert wird, möglichst mit Hilfe nur eines Temperatursensors erfaßt werden. Da sich dieser Sensor an einem festen Einbauort befindet und in Abhängigkeit von der eingestellten Luftverteilung mehr oder weniger mit Ausblasluft beaufschlagt wird, ist auch das Meßergebnis nur mehr oder weniger gut. Oft wird die Ausblastemperatur im Bereich eines Luftauslasses im Fußraum gemessen. Wird jedoch bei einer erforderlichen Abkühlung des Innenraums vornehmlich kalte Luft in den Kopfbereich gefördert, ist das Meßergebnis für die Ausblastemperatur wenig repräsentativ. Der Lösung dieses Problems widmet sich auch die DE-OS 42 14 687, wobei das Meßergebnis des Ausblastemperatur-Sensors in Abhängigkeit von der eingestellten Luftverteilung bewertet wird. Mit abnehmender Beaufschlagung des Ausblastemperatur-Sensors mit Ausblasluft wird die Bedeutung der gemessenen Ausblastemperatur bei der Innentemperaturregelung herabgesetzt. Ein reiner Kühlbetrieb erfolgt praktisch ohne Einfluß einer gemessenen Ausblastemperatur auf die Regelung.

Ist ein Fahrzeuginnenraum stark aufgeheizt und eine schnelle Abkühlung erwünscht, ist es von Vorteil, gekühlte Luft ausschließlich in den Kopfbereich zu fördern. Einige Hersteller empfehlen beim Start eines Klimaanlagenbetriebs unter derartigen Bedingungen, zuerst kurz die Fenster zu öffnen und die heiße Luft bei hoher Gebläseleistung aus dem Innenraum zu "drücken". Dies kann nicht sehr effektiv erfolgen, wenn gekühlte Luft ausschließlich in den Kopfraum gefördert wird.

Es ist Aufgabe der Erfindung, ein Verfahren zu schaffen, das eine schnelle automatisch geregelte Abkühlung des Innenraums eines Kraftfahrzeuges und anschließend einen optimierten Betrieb einer Klimatisierungsvorrichtung ermöglicht. Dabei soll der Betrieb der Klimatisierungsvorrichtung unter allen Bedingungen überprüfbar, also eine hinreichend genau gemessene Ausblastemperatur immer als Regelungsparameter verfügbar sein.

Zur Lösung dieser Aufgabe zeichnet sich das o. g. Verfahren zur Abkühlung des Innenraums eines Kraftfahrzeugs zusätzlich durch die im Patentanspruch 1 genannten kennzeichnenden Merkmale aus. Ein weiteres vorteilhaftes Verfahrensmerkmal ist im Patentanspruch 2 genannt. Das erfindungsgemäße Verfahren ist mit Hilfe an sich bekannter Klimatisierungsvorrichtungen durchführbar und führt zu einer hohen Effizienz beim Betrieb dieser Vorrichtungen und zu einer Komfortverbesserung für die Fahrzeuginsassen.

Wird in einem Innenraum eines Kraftfahrzeugs eine Ist-Temperatur gemessen, die höher ist als eine gewünschte und vorgegebene Soll-Temperatur, ist eine Abkühlung des Innenraumes erforderlich. Außenluft wird mittels einer Klimatisierungsvorrichtung gekühlt und dem Innenraum zugeführt, was von einer Regeleinrichtung geregelt wird. Im Bereich eines Luftauslasses im Fußraum des Kraftfahrzeugs wird die Ausblastemperatur der in den Innenraum geförderten Luft (anders als im Stand der Technik bekannt) bei allen Betriebszuständen der Klimatisierungsvorrichtung hinreichend genau gemessen. Ein dort angeordneter Sensor wird dynamisch veränderlich mit Ausblasluft beaufschlagt. Dem Fußraum und damit dem Sensor wird nicht eine bei steigendem Kühlleistungsbedarf abnehmende Luftmenge (Stand der Technik), sondern ein mit dem Kühlleistungsbedarf zunehmender Luft-Volumenstrom zugeführt. Ein Maß für den Kühlleistungsbedarf ist die Differenz zwischen der Soll- und der Ist-Temperatur im Innenraum. Ein negatives Vorzeichen dieser Differenz zeigt an, daß Abkühlung erforderlich ist. Mit einem steigenden Betrag dieser Differenz wird dem Fußraum erfindungsgemäß auch eine steigende Luftmenge zugeführt. Damit liefert der Ausblastemperatur-Sensor auch bei einem Betrieb der Klimatisierungsvorrichtung mit hoher Kühlleistung repräsentative Werte der Ausblastemperatur. Dieser Meßwert kann ohne rechentechnische Minderung seiner Wertigkeit in die Regelung einbezogen werden.

Bei einem hohen Betrag der Differenz zwischen Soll- und Ist-Temperatur ist eine schnelle Annäherung des Ist-Wertes an den Soll-Wert gewünscht. Dies ist beispielsweise der Fall, wenn das Fahrzeug für längere Zeit in der Sonne stand. Da sich die Temperatur der Ausblasluft in dieser Anfangsphase des Betriebs der Klimatisierungsvorrichtung schnell ändert und auch die Ausblastemperatur bestimmende Regelgrößen verändert werden, ist eine sehr schnelle Erfassung der Ausblastemperatur notwendig. Dies ist nur bei einer Beaufschlagung des Sensors mit einem hohen Volumenstrom möglich.

Ist die Differenz zwischen der Soll- und der Ist-Temperatur andererseits gering, sind auch keine schnellen Veränderungen der Ausblastemperatur oder häufige Umsteuervorgänge zu erwarten. Der Sensor kann mit einer geringen Luftmenge pro Zeiteinheit beaufschlagt werden und liefert trotzdem hinreichend genaue Meßergebnisse.

Der Luftauslaß, in dessen Bereich die Ausblastemperatur gemessen wird, wird also bei einer notwendigen Abkühlung des Fahrzeuginnenraumes mit zunehmendem Temperaturdifferenz-Betrag auch zunehmend geöffnet bzw. bei abnehmendem Differenz-Betrag beispielsweise proportional verschlossen. Er bleibt jedoch immer mindestens so weit geöffnet, daß der Ausblasluft-Temperatursensor mit einer minimalen Luftmenge beaufschlagt wird.

Für die Regelung der Klimatisierungsvorrichtung steht somit auch bei einem Prozeß des Abkühlens des Fahrzeuginnenraumes immer ein hinreichend genauer Meßwert für die Ausblastemperatur zur Verfügung. Ein Aufwand zur Wichtung des Meßwertes wird vermieden.

Zusätzlich besteht eine vorteilhafte Wirkung der Erfindung darin, daß die Klimatisierungsvorrichtung effektiver als im Stand der Technik üblich betreibbar ist. Bei einer Ist-Temperatur im Fahrzeuginnenraum, die deutlich höher als eine Soll-Temperatur ist, wird ein großer Volumenstrom gekühlter Luft in den Fußraum und ein entsprechend kleinerer Anteil zu den übrigen Luftauslässen (speziell in den Kopfraum) gefördert. Heiße Luft wird sehr schnell aus dem Fahrzeug "gedrückt".

Verringert sich die gemessene Ist-Temperatur mit der Zeit, wird immer weniger Luft in den Fußraum geleitet. Sehr kalte Luft im Fußraum würde auch auf Dauer als unangenehm empfunden werden. Nach schneller Abkühlung des Innenraumes wird die Klimatisierungsvorrichtung selbsttätig komfortoptimiert eingestellt.

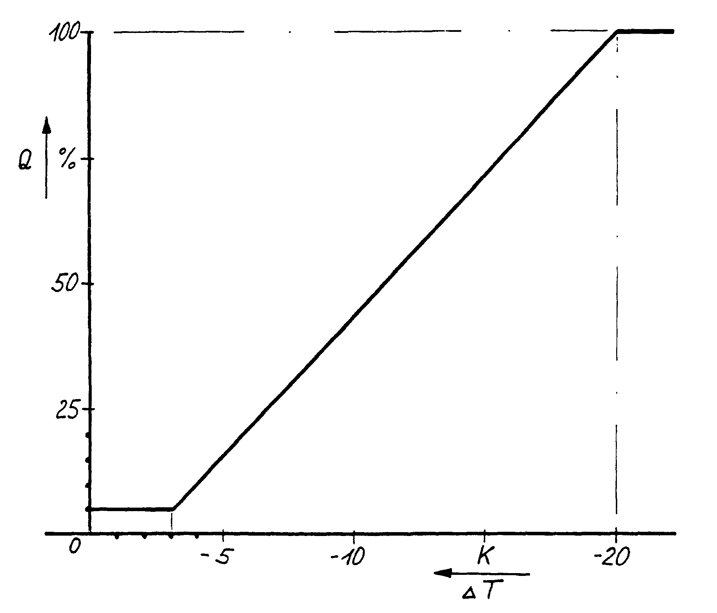

Anhand des in der einzigen Figur gezeigten Diagramms soll das Verfahren zur Einstellung einer Fußraum-Klappe in Abhängigkeit von der Differenz zwischen Soll- und Ist-Temperatur beispielhaft erläutert werden. Die zugehörige Klimatisierungsvorrichtung ist nicht gezeigt, wobei die genannte Fußraum-Klappe den Luftkanal verschließen soll, in dessen Auslaßbereich (im Fußraum) die Ausblastemperatur gemessen wird.

In dem Diagramm ist mit Q der Öffnungsquerschnitt des genannten Luftkanals zum Fußraum bezeichnet, wobei dieser Wert in Prozent angegeben ist. Bei 0% wäre der Luftkanal vollständig geschlossen und bei 100% ist er vollständig geöffnet. Die Temperaturdifferenz zwischen der Soll-Temperatur und der Ist-Temperatur ist mit ΔT bezeichnet. Sie ist ausschließlich für den Bereich eines zu warmen Innenraumes in der Maßeinheit Kelvin angegeben. Die Ist-Temperatur wird sensorisch beispielsweise im Armaturentafelbereich des Kraftfahrzeuges erfaßt, und die Soll-Temperatur wird von einem Fahrzeuginsassen vorgegeben.

Erkennbar ist, daß der Luftauslaß im Fußraum maximal geöffnet ist, wenn der Fahrzeuginnenraum 20 oder mehr Kelvin wärmer ist als erwünscht. Bei in Richtung Null steigender Temperaturdifferenz ΔT wird die Luftklappe zunehmend verschlossen, was durch Signale einer Regeleinrichtung der Klimatisierungsvorrichtung veranlaßt wird. Ist eine Temperatur-Differenz ΔT nahe Null, also annähernd die Soll-Temperatur erreicht, ist die Luftklappe nur noch minimal geöffnet. Somit wird nur noch ein minimaler Volumenstrom in den Fußraum und an den Ausblastemperatur-Sensor gefördert. Mit der Durchführung dieses Verfahrens sind die weiter oben beschriebenen Vorteile verbunden.

## Patentansprüche

1. Verfahren zum Abkühlen des Innenraumes eines Kraftfahrzeugs, bei dem
- eine Innenraum-Ist-Temperatur gemessen und eine Soll-Temperatur vorgegeben wird,
- die Ist- und die Soll-Temperatur einer Regeleinrichtung zugeführt werden, durch die der Betrieb einer Klimatisierungsvorrichtung geregelt wird,
- von der Klimatisierungsvorrichtung gekühlte oder ungekühlte Außenluft über verschiedene Luftkanäle und -auslässe in den Innenraum ausgeblasen wird,
- eine Ausblastemperatur der Ausblasluft, die im Bereich eines Luftauslasses gemessen wird, ebenfalls zur Beeinflussung des Betriebs der Klimatisierungsvorrichtung herangezogen wird und
- eine Verteilung der Ausblasluft auf die an unterschiedlichen Stellen des Innenraums endenden Luftkanäle von einem Ausgangssignal der Regeleinrichtung, insbesondere von einer die Differenz zwischen der Soll- und der Ist-Temperatur repräsentierenden Größe beeinflußt wird,
**dadurch gekennzeichnet, daß** die Ausblastemperatur in an sich bekannter Weise im Bereich eines Luftauslasses im Fußraum des Kraftfahrzeugs gemessen wird und eine sich dynamisch verändernde Verteilung der Ausblasluft derart erfolgt, daß durch diesen Luftauslaß im Fußraum eine mit dem Betrag des Ausgangssignals steigende Luftmenge in den Innenraum gefördert wird.

2. Verfahren zum Abkühlen des Innenraumes eines Kraftfahrzeugs nach Anspruch 1, **dadurch gekennzeichnet, daß** die Verteilung der Ausblasluft derart erfolgt, daß durch den Luftauslaß im Fußraum, in dessen Bereich die Ausblastemperatur gemessen wird, auch bei einem Betrag des Ausgangssignals der Regeleinrichtung nahe Null grundsätzlich eine minimale Luftmenge ausgeblasen wird.

## Claims

1. Method for cooling the interior of a motor vehicle, in which
- an actual interior temperature is measured and a nominal temperature is preset,
- the actual and nominal temperatures are delivered to a regulating device by which the operation of an air conditioning apparatus is regulated,
- outside air cooled by the air conditioning apparatus or uncooled outside air is blown out through various air ducts and outlets into the interior,
- a blow-out temperature of the blow-out air, which is measured in the region of an air outlet, is also used to influence operation of the air conditioning apparatus and
- distribution of the blow-out air to the air ducts ending at different locations of the interior is influenced by an output signal of the regulating device, in particular by a variable representing the difference between the nominal and actual temperatures,
**characterised in that** the blow-out temperature is measured in a manner known in the art in the region of an air outlet in the footwell of the motor vehicle and dynamically varying distribution of the blow-out air is effected in such a way that through this air outlet in the footwell an air quantity increasing with the quantity of the output signal is conveyed into the interior.

2. Method for cooling the interior of a motor vehicle according to claim 1, **characterised in that** distribution of the blow-out air is effected in such a way that, through the air outlet in the footwell in the region of which the blow-out temperature is measured, even with a quantity of the output signal of the regulating device equal to zero basically a minimum air quantity is blown out.

## Revendications

1. Procédé pour refroidir l'habitacle d'un véhicule automobile, dans lequel
· une température réelle d'habitacle est mesurée et une température de consigne est fixée,
· la température réelle et la température de consigne sont transmises à un dispositif de régulation par lequel le fonctionnement d'un dispositif de climatisation est régulé,
· de l'air extérieur refroidi par le dispositif de climatisation ou non refroidi est soufflé dans l'habitacle à travers différents canaux à air et sorties d'air,
· une température de sortie de l'air soufflé, qui est mesurée dans la région d'une sortie d'air est mesurée et est également utilisée pour agir sur le fonctionnement du dispositif de climatisation et
· et une répartition de l'air soufflé entre les canaux à air débouchant en différents points de l'habitacle est modifiée par un signal de sortie du dispositif de régulation, en particulier par une grandeur représentant la différence entre la température de consigne et la température réelle,
**caractérisé en ce que**, d'une manière connue en soi, la température de sortie de l'air est mesurée dans la région d'une sortie d'air dans la zone de pied du véhicule et que la répartition réglée de manière dynamique de l'air soufflé est telle que le débit d'air à travers ladite sortie d'air située dans la zone de pied augmente avec la valeur du signal de sortie.

2. Procédé pour refroidir l'habitacle d'un véhicule automobile selon la revendication 1, **caractérisé en ce que** la répartition de l'air soufflé est telle que la température de sortie de l'air à travers la sortie d'air située dans la zone de pied est mesurée dans la région de ladite sortie et que même en présence d'un signal de sortie du dispositif de régulation proche de zéro, une quantité minimale d'air est introduite dans l'habitacle.
